# EUROPÄISCHE PATENTSCHRIFT

(11) **EP 3 310 601 B1**
(45) Veröffentlichungstag und Bekanntmachung des Hinweises auf die Patenterteilung: **31.07.2019**
(21) Anmeldenummer: 16731143.0
(22) Anmeldetag: 22.06.2016
(51) Int. Cl.: B60J 1/20

(54) **BESCHATTUNGSVORRICHTUNG FÜR EINE ZWEIGETEILTE SEITENFENSTERANORDNUNG EINES KRAFTFAHRZEUGS**
SHADING DEVICE FOR A TWO-PART SIDE WINDOW ARRANGEMENT OF A MOTOR VEHICLE
DISPOSITIF D'OMBRAGE DESTINÉ À UN SYSTÈME DE VITRE LATÉRALE EN DEUX PARTIES D'UN VÉHICULE AUTOMOBILE

(30) Priorität: 22.06.2015 DE 102015007898
(43) Veröffentlichungstag der Anmeldung: 25.04.2018
(73) Patentinhaber: BOS GmbH & Co. KG, 73760 Ostfildern (DE)
(72) Erfinder: HINTENNACH, Markus, 73666 Baltmannsweiler (DE)
(74) Vertreter: Patentanwälte Ruff, Wilhelm, Beier, Dauster & Partner mbB
(86) Internationale Anmeldenummer: PCT/EP2016/064358
(87) Internationale Veröffentlichungsnummer: WO 2016/207189

(56) Entgegenhaltungen:
- EP-A1- 1 306 251
- EP-A1- 2 060 421
- US-A1- 2013 048 228

## Beschreibung

Die Erfindung betrifft eine Beschattungsvorrichtung für eine zweigeteilte Seitenfensteranordnung eines Kraftfahrzeugs mit einem Hauptbeschattungsgebilde für ein Hauptfenster und mit einem Nebenbeschattungsgebilde für ein Nebenfenster, wobei das Hauptbeschattungsgebilde zumindest im Wesentlichen in Hochrichtung zwischen einer Ruhestellung und einer Beschattungsstellung verlagerbar und auf einer Wickelwelle auf- und abwickelbar gehalten ist, und wobei das Nebenbeschattungsgebilde zumindest im Wesentlichen quer zu dem Hauptbeschattungsgebilde zwischen einer Ruhestellung und einer Beschattungsstellung verlagerbar ist, sowie mit einem Antriebssystem, das eine Antriebseinheit und einen Hauptantriebsstrang mit zwei Antriebsübertragungsmitteln aufweist, die mit dem Hauptbeschattungsgebilde zusammenwirken, und das einen Nebenantriebsstrang mit wenigstens einem Antriebsübertragungsmittel zur Verlagerung des Nebenbeschattungsgebildes aufweist, der mit der Antriebseinheit in Wirkverbindung ist.

Eine derartige Beschattungsvorrichtung ist aus der EP 1 129 871 A1 und aus der EP 1 306 251 A1 bekannt. Die bekannte Beschattungsvorrichtung weist ein Hauptbeschattungsgebilde auf, das zur Beschattung eines Hauptfensters einer Seitentür des Kraftfahrzeugs vorgesehen ist. Zudem ist ein Nebenbeschattungsgebilde vorgesehen, um ein Nebenfenster der Seitentür zu beschatten. Das Nebenbeschattungsgebilde ist quer zu dem Hauptbeschattungsgebilde zwischen einer Ruhestellung und einer Beschattungsstellung verlagerbar, wobei das Hauptbeschattungsgebilde in Fahrzeughochrichtung längs des Hauptfensters verlagerbar ist. Zur Verlagerung des Hauptbeschattungsgebildes zwischen einer Ruhestellung und einer Beschattungsstellung sind Antriebsübertragungsmittel in Form von Gewindesteigungskabeln vorgesehen, die in Fensterholmen verlaufen, die das Hauptfenster auf gegenüberliegenden Seiten flankieren. Diese verlagern ein formstabiles Auszugprofil des Beschattungsgebildes im Wesentlichen in Fahrzeughochrichtung. Für das Nebenbeschattungsgebilde ist ein Antriebsübertragungsmittel in Form einer Steuerhebelanordnung vorgesehen, die über ein weiteres Gewindesteigungskabel verlagerbar ist. Das weitere Gewindesteigungskabel zur Verlagerung der Steuerhebelanordnung ist über eine Steuereinrichtung von einem Antriebssystem für die Gewindesteigungskabel des Hauptbeschattungsgebildes abgeleitet. Die Steuereinrichtung dient dazu, den gegenüber dem Hauptbeschattungsgebilde verkürzten Auszugweg des Nebenbeschattungsgebildes auszugleichen.

Aufgabe der Erfindung ist es, eine Beschattungsvorrichtung der eingangs genannten Art zu schaffen, die einfach und platzsparend aufgebaut ist.

Diese Aufgabe wird dadurch gelöst, dass Antriebselemente für die zwei Antriebsübertragungsmittel des Hauptbeschattungsgebildes über eine Synchronwelle synchron drehfest miteinander gekoppelt sind, und dass die Synchronwelle zu der Wickelwelle für das Hauptbeschattungsgebilde zumindest weitgehend parallel beabstandet gelagert ist. Die Wickelwelle selbst muss erfindungsgemäß keine Synchronisierung der beiden Antriebsübertragungsmittel bewirken. Dies erfolgt vielmehr über eine separate Synchronwelle, die etwa parallel zu der Wickelwelle beabstandet ist. Die Wickelwelle selbst kann demzufolge einen kleinen Durchmesser aufweisen und kompakt ausgebildet sein. Die erfindungsgemäße Lösung eignet sich in besonders vorteilhafter Weise für eine Seitenfensteranordnung eines Personenkraftwagens, insbesondere im Bereich einer Fondseitentür des Personenkraftwagens.

In Ausgestaltung der Erfindung ist die Synchronwelle über ein Getriebe mit der Antriebseinheit gekoppelt, und der Nebenantriebsstrang ist koaxial von der Synchronwelle abgeleitet. Durch die koaxiale Ableitung des Nebenantriebsstrangs ist ein besonders einfacher Aufbau des Antriebssystems ermöglicht. Die koaxiale Anordnung ist zudem platzsparend.

In weiterer Ausgestaltung der Erfindung weist der Nebenantriebsstrang ein Abtriebsglied auf, das auf einer Seite koaxial und drehfest mit der Synchronwelle verbunden ist. Das Abtriebsglied ist vorzugsweise stirnseitig an der Synchronwelle angeordnet.

In weiterer Ausgestaltung der Erfindung ist das Abtriebsglied auf einer anderen Seite mit dem wenigstens einen Antriebsübertragungsmittel des Nebenantriebsstrangs über eine Anlenkung verbunden, deren Drehachse winklig, insbesondere rechtwinklig, zu einer Drehachse der Synchronwelle ausgerichtet ist. Die andere Seite ist vorzugsweise die gegenüberliegende Seite des Abtriebsglieds, das eine Umlenkung der Drehmomentübertragung von der Synchronwelle zum Nebenantriebsstrang hin bewirkt. Das Abtriebsglied ist dazu vorgesehen, entsprechende Drehmomente winklig zu übertragen. Besonders vorteilhaft ist das Abtriebsglied als Kegelzahnradgetriebe, als flexible Übertragungswelle, als Kardangelenk- oder als Kreuzgelenkwelle ausgeführt.

In weiterer Ausgestaltung der Erfindung ist die Antriebseinheit mittels eines Zahnradgetriebes mit der Wickelwelle, der Synchronwelle und dem Abtriebsglied gekoppelt. Die Antriebseinheit ist in vorteilhafter Weise ein Elektromotor, der über ein Fahrzeugbordnetz und eine geeignete Steuereinrichtung betrieben wird.

In weiterer Ausgestaltung der Erfindung sind einem Stirnende der Wickelwelle und einem Stirnende der Synchronwelle zwei miteinander kämmende Stirnzahnräder zugeordnet. Die Stirnzahnräder sind vorzugsweise in einer Flucht übereinander angeordnet. Die Ausgestaltung ermöglicht einen einfachen und kompakten Aufbau.

In weiterer Ausgestaltung der Erfindung ist als Antriebsübertragungsmittel für das Nebenbeschattungsgebilde ein Seilzug mit zwei synchron gegenläufig zueinander angetriebenen Wickelspulen vorgesehen. Der synchron gegenläufige Antrieb der beiden Wickelspulen erfolgt vorzugsweise über zwei koaxial zu der jeweiligen Wickelspule angeordnete und miteinander kämmende Stirnzahnräder, die dem Nebenantriebsstrang zugeordnet sind.

In weiterer Ausgestaltung der Erfindung ist die Wickelwelle konisch gestaltet, und als Antriebsübertragungsmittel für das Hauptbeschattungsgebilde sind zwei Seilzüge mit zu der Konizität der Wickelwelle derart komplementär konischen Wickelspulen vorgesehen, dass abhängig von den sich ändernden Wickellagen des Hauptbeschattungsgebildes auf der Wickelwelle eine gleichmäßige Zugbelastung der Seilzüge aufrechterhalten bleibt. Die Konizität der konischen Wickelspulen ist demzufolge entgegengesetzt zu einem entsprechend ab- oder zunehmenden Wickel durch die Wickellagen der Wickelwelle je nach Auf- oder Abwicklungszustand des Hauptbeschattungsgebildes gewählt. Entsprechend nimmt ein Seilwickeldurchmesser der konischen Wickelspulen zu, wenn ein Wickeldurchmesser der Wickellagen des Hauptbeschattungsgebildes auf der Wickelwelle abnimmt, so dass die jeweils wirksamen Durchmesser zumindest weitgehend gleich sind. Dadurch ist es möglich, die beiden Seilzüge weitgehend spannungsfrei zu bewegen.

In weiterer Ausgestaltung der Erfindung ist zwischen der Wickelwelle des Hauptbeschattungsgebildes und dem Zahnradgetriebe der Antriebseinheit eine Federvorspanneinrichtung vorgesehen, die die Wickelwelle in Aufwickelrichtung vorspannt. Dadurch wird ein Faltenwurf bei dem Hauptbeschattungsgebilde vermieden, der durch Toleranzen bei der Montage der Beschattungsvorrichtung im Bereich einer entsprechenden Seitenfensteranordnung oder durch Temperaturunterschiede während des Betriebs der Beschattungsvorrichtung auftreten kann.

In weiterer Ausgestaltung der Erfindung ist zwischen einer Wickelwelle des Nebenbeschattungsgebildes und dem Nebenantriebsstrang eine weitere Federvorspanneinrichtung vorgesehen. Die weitere Federvorspanneinrichtung hat die gleiche Funktion wie die Federvorspanneinrichtung für die Wickelwelle des Hauptbeschattungsgebildes.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch eine Ausführungsform einer erfindungsgemäßen Beschattungsvorrichtung und
- Fig. 2: in vergrößerter Darstellung einen Längsschnitt durch einen linken Stirnendbereich einer konischen Wickelwelle für die Beschattungsvorrichtung gemäß Fig. 1.

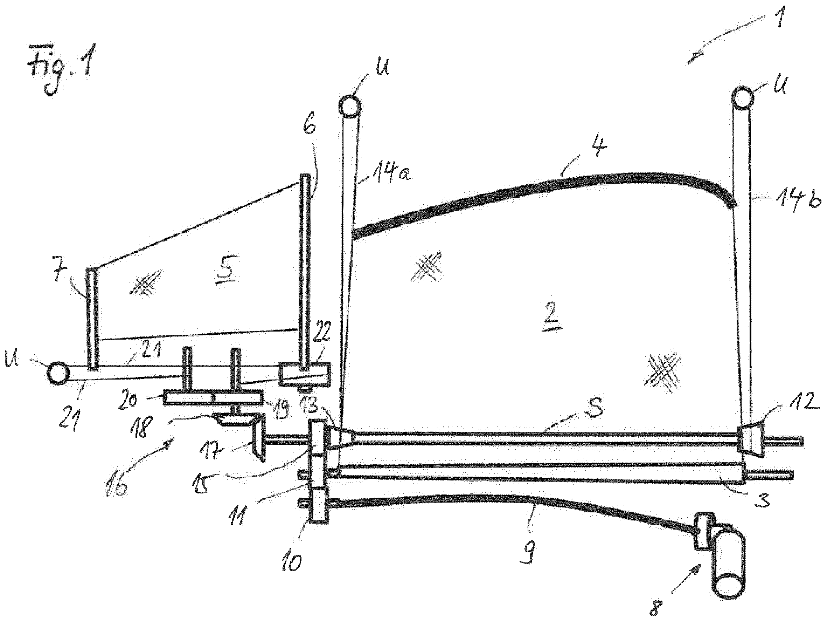

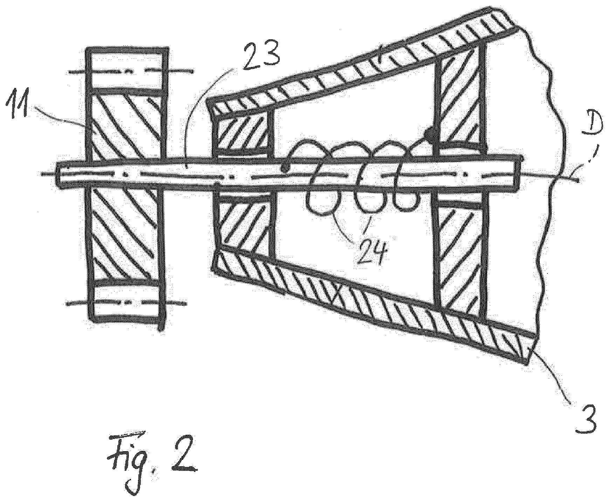

Eine Beschattungsvorrichtung 1 nach den Fig. 1 und 2 ist für eine fondseitige Seitentür eines Personenkraftwagens vorgesehen. Die Seitentür weist eine zweigeteilte Seitenfensteranordnung auf. Ein Hauptfenster der Seitenfensteranordnung ist von einem kleineren Nebenfenster durch einen etwa in Fahrzeughochrichtung erstreckten Fensterholm getrennt. Das Hauptfenster ist gegenüberliegend zu dem Fensterholm in Fahrzeuglängsrichtung nach vorne durch einen etwa in Fahrzeughochrichtung erstreckten seitlichen Türrahmen begrenzt. Eine obere Begrenzung des Hauptfensters wird durch einen oberen Türrahmen gebildet, der sich über das Nebenfenster hinweg fortsetzt. Türinnenseitig sind Türverkleidungsprofile im Bereich des Fensterholms und des Türrahmens vorgesehen. Eine Unterseite sowohl des Hauptfensters als auch des Nebenfensters wird durch eine innenseitig angeordnete Türbrüstung begrenzt.

Die Beschattungsvorrichtung 1 ist türinnenseitig im Bereich der Seitentür angeordnet. Die Beschattungsvorrichtung 1 weist ein Hauptbeschattungsgebilde 2 auf, das bahnförmig gestaltet ist. Das Hauptbeschattungsgebilde 2 ist auf einer konischen Wickelwelle 3 auf- und abwickelbar gehalten. Ein in Auszugrichtung vorderer Stirnendbereich des Hauptbeschattungsgebildes 2 ist mit einem formstabilen Auszugprofil 4 versehen, das entsprechend einer oberen Randkontur des Hauptfensters und damit des oberen Türrahmens gekrümmt ist. Die Wickelwelle 3 ist um eine Drehachse D (Fig. 2) unterhalb der Türbrüstung türfest drehbar gelagert. Eine Konizität der Wickelwelle 3 erstreckt sich über eine gesamte Länge der Wickelwelle 3. Die Drehachse D der Wickelwelle 3 erstreckt sich im Wesentlichen horizontal und im Wesentlichen in Fahrzeuglängsrichtung, sobald die Beschattungsvorrichtung 1 funktionsfertig im Bereich einer Innenseite der Seitentür des Personenkraftwagens montiert ist. Das Hauptbeschattungsgebilde 2 ist zwischen einer auf die Wickelwelle 3 aufgewickelten Ruhestellung und einer etwa in Fahrzeughochrichtung nach oben ausgezogenen Beschattungsstellung verlagerbar, in der das Beschattungsgebilde 2 faltenfrei aufgespannt ist. In der Beschattungsstellung des Hauptbeschattungsgebildes 2 ist das Auszugprofil 4 im Wesentlichen bündig im Bereich des oberen Türrahmens positioniert.

Zur Beschattung des Nebenfensters weist die Beschattungsvorrichtung 1 ein Nebenbeschattungsgebilde 5 auf, das ebenfalls bahnförmig und flexibel gestaltet ist und auf einer im Wesentlichen in Fahrzeughochrichtung im Bereich des Fensterholms drehbar gelagerten Wickelwelle 6 auf- und abwickelbar gehalten ist. Das Nebenbeschattungsgebilde 5 ist im Wesentlichen quer zu einer Auszugrichtung des Hauptbeschattungsgebildes 2 zwischen einer auf die Wickelwelle 6 aufgewickelten Ruhestellung und einer das Nebenfenster überdeckenden Beschattungsstellung verlagerbar, in der das Nebenbeschattungsgebilde 5 flächig und faltenfrei aufgespannt ist. Sowohl das Nebenbeschattungsgebilde 5 als auch das Hauptbeschattungsgebilde 2 überdecken das Nebenfenster bzw. das Hauptfenster in der Beschattungsstellung zumindest weitgehend vollständig, wobei eine Aufspannebene des Nebenbeschattungsgebildes 5 wie auch eine Aufspannebene des Hauptbeschattungsgebildes 2 im Wesentlichen parallel zu den durch das Nebenfenster und das Hauptfenster definierten Ebenen ausgerichtet sind.

Das Nebenbeschattungsgebilde 5 ist trapezartig gestaltet und weist an seinem in Auszugrichtung vorderen Stirnendbereich ein formstabiles Führungsprofil 7 auf.

Um sowohl das Hauptbeschattungsgebilde 2 als auch das Nebenbeschattungsgebilde 5 zwischen der Ruhestellung und der Beschattungsstellung verlagern zu können, ist die Beschattungsvorrichtung 1 mit einem Antriebssystem versehen, das nachfolgend näher beschrieben ist. Das Antriebssystem weist einen elektrischen Antriebsmotor 8 auf, der über ein Getriebe und eine flexible Welle 9 ein Antriebszahnrad 10 antreibt, das im Bereich der Türinnenseite türfest und drehbar gelagert ist. Das Antriebszahnrad 10 ist als Stirnzahnrad ausgeführt und weist eine Drehachse auf, die parallel zur Drehachse D der Wickelwelle 3 ausgerichtet ist. Koaxial zu der Drehachse D der Wickelwelle 3 ist ein weiteres Stirnzahnrad 11 vorgesehen, das gemäß Fig. 2 drehfest mit der Wickelwelle 3 verbunden ist. Dabei ist das Stirnzahnrad 11 über eine Federvorspanneinrichtung 23, 24 drehfest mit der Wickelwelle 3 verbunden, die eine begrenzte Relativdrehbeweglichkeit des Stirnzahnrads 11 relativ zur Wickelwelle 3 ermöglicht. Hierzu ist das Stirnzahnrad 11 auf einer Vorspannachse 23 befestigt, die koaxial zu der Wickelwelle 3 in einem Stirnendbereich der Wickelwelle 3 drehbar gelagert ist. Eine Drehbarkeit der Vorspannachse 23 ist begrenzt durch eine Federeinrichtung 24 in Form einer Schraubenfeder, die mit einem Schenkel an der Vorspannachse 23 und mit einem gegenüberliegenden Schenkel an einem entsprechenden Trägerflansch der Wickelwelle 3 befestigt ist. Die Wickelwelle 3 wird hierdurch relativ zu dem Stirnzahnrad 11 unter permanenter, begrenzter Vorspannung in Aufwickelrichtung gehalten, so dass auf das Hauptbeschattungsgebilde 2 immer eine geringe Zugbelastung in Aufwickelrichtung ausgeübt wird.

Um das Auszugprofil und demzufolge das Hauptbeschattungsgebilde 2 zwischen der Ruhestellung und der Beschattungsstellung verlagern zu können, weist das Antriebssystem beidseitig des Auszugprofils 4 jeweils einen Seilzug 14a, 14b auf. Der Seilzug 14a wie auch der Seilzug 14b greifen an jeweils einem Stirnende des Auszugprofils 4 an, das in nicht dargestellten Seitenführungen längs des Fensterholms und des seitlichen Türrahmens im Wesentlichen in Fahrzeughochrichtung parallel verlagerbar ist. In diesen Seitenführungen sind auch die Seilzüge 14a und 14b verlegt. Ein Seilende des jeweiligen Seilzugs 14a, 14b greift im Bereich des entsprechenden Stirnendes des Auszugprofils 4 an, während ein gegenüberliegendes Seilende des jeweiligen Seilzugs 14a, 14b auf einer konischen, d.h. kegelförmigen Wickelspule 12, 13 auf- und abwickelbar gehalten ist. Beide Seilzüge 14a, 14b weisen zudem in einem oberen Endbereich der jeweiligen Seitenführung jeweils eine Umlenkrolle U für das Seil des jeweiligen Seilzugs 14a, 14b auf. Eine entsprechende Konizität der jeweiligen, kegelförmigen Wickelspule 12, 13 ist so gewählt, dass sich unabhängig von der Anzahl der auf- oder abgewickelten Wickellagen des Hauptbeschattungsgebildes 2 auf der Wickelwelle 3 permanent eine gleichmäßige Seilspannung für den jeweiligen Seilzug 14a, 14b ergibt. Zudem sind die gegenüberliegenden Wickelspulen 12 und 13 unterschiedlich konisch gestaltet, um eine Konizität der Wickelwelle 3 ergänzend auszugleichen. Ein Drehen der Wickelspulen 12, 13 führt zu entsprechenden Verlagerungsvorgängen der Seilzüge 14a und 14b, wodurch das Auszugprofil 4 in entsprechender Weise nach oben oder nach unten verlagert wird. Die beiden Wickelspulen 12, 13 werden synchron zueinander betrieben. Hierzu ist eine Synchronwelle S vorgesehen, die sich zumindest weitgehend parallel zu der Wickelwelle 3 erstreckt und die oberhalb der Wickelwelle 3, aber unterhalb der Türbrüstung türinnenseitig drehbar gelagert ist. Mit der Synchronwelle koaxial und drehfest verbunden ist ein Stirnzahnrad 15, das in Fahrzeughochrichtung mit dem Stirnzahnrad 11 und mit dem Antriebszahnrad 10 fluchtet. Das Stirnzahnrad 15 kämmt mit dem Stirnzahnrad 11. Ein Antrieb des Antriebszahnrads 10 über eine entsprechende Betätigung des elektrischen Antriebsmotors 8 und eine entsprechende Drehung der flexiblen Übertragungswelle 9 führt demzufolge zu einer Drehung der Wickelwelle 3 und einer Drehung der Synchronwelle S. Die konischen Wickelspulen 12 und 13 dienen dazu, das jeweilige Seil des jeweiligen Seilzugs 14a und 14b auf ihren konischen Außenmantel aufzuwickeln oder von diesem abzuwickeln. Dadurch, dass die Konizität der jeweiligen Wickelspule 12, 13 auf die unterschiedlichen Wickeldurchmesser des Hauptbeschattungsgebildes 2 auf der Wickelwelle 3 abhängig von der Anzahl der auf- oder abgewickelten Wickellagen abgestimmt ist, verbleiben die Seilzüge 14a und 14b bei durch den Antriebsmotor 8 erfolgter Verlagerung des Auszugprofils 4 nach oben oder nach unten zwischen der Beschattungsstellung und der Ruhestellung immer in gleichmäßiger Seilspannung. Ergänzend führt die Federvorspanneinrichtung 23, 24 dazu, dass das Hauptbeschattungsgebilde 2 eine permanente, geringe Zugspannung in Aufwickelrichtung aufweist, so dass ein Faltenwurf des Hauptbeschattungsgebildes 2 unabhängig von Montagetoleranzen oder Temperaturunterschieden im Betrieb der Beschattungsvorrichtung 1 vermieden wird.

Der Antriebsmotor 8 treibt auch einen Nebenantriebsstrang 16 an, der zur Verlagerung des Nebenbeschattungsgebildes 5 zwischen der Ruhestellung und der Beschattungsstellung vorgesehen ist. Der Nebenantriebsstrang 16 dient zum einen zur Verlagerung des Führungsprofils 7 zwischen der Beschattungsstellung und der Ruhestellung, wobei das Führungsprofil 7 im Wesentlichen quer zur Verlagerungsrichtung des Auszugprofils 4 und damit gemäß der Ausführungsform nach Fig. 1 im Wesentlichen horizontal verlagert wird. Gemeinsam mit der Verlagerung des Führungsprofils 7 dient der Nebenantriebsstrang 16 dazu, die Wickelwelle 6 des Nebenbeschattungsgebildes 5 in Abwickelrichtung oder in Aufwickelrichtung zu drehen. Zur Drehung der Wickelwelle 6 und zur Verlagerung des Führungsprofils 7 in einer türfesten Führung im Bereich der Türbrüstung und damit im Bereich einer Unterseite des Nebenfensters ist ein Seilzug 21 vorgesehen, der an dem Führungsprofil 7 angreift und dessen gegenüberliegende Seilenden auf zwei zylindrischen Wickelspulen 19, 20 auf- und abwickelbar gehalten sind. Die beiden Wickelspulen 19 und 20 sind synchron und gegensinnig zueinander drehbar gelagert. Eine synchrone und gegensinnige Drehung der beiden Wickelspulen 19, 20 wird durch eine Synchronisiereinrichtung gebildet, die beim dargestellten Ausführungsbeispiel durch zwei miteinander kämmende Stirnzahnräder vorgesehen ist, die koaxial zu einer Drehachse der jeweiligen Wickelspule 19, 20 angeordnet sind. Das Seil des Seilzugs 21 ist auf einer Seite über eine Umlenkrolle U umgelenkt. Auf der gegenüberliegenden Seite umschlingt das Seil des Seilzugs 21 eine Umlenkwalze 22, die koaxial und drehfest zu der zylindrischen Wickelwelle 6 angeordnet ist. Von der einen Umlenkrolle U wird das Seil zu der in Fig. 1 linken Wickelspule 20 geführt. Von der gegenüberliegenden Umlenkwalze 22 ausgehend wird das gegenüberliegende Seilende zu der in Fig. 1 rechten Wickelspule 19 geführt. Durch die gegensinnige Drehung der beiden Wickelspulen 19 und 20 wird das eine Seilende jeweils auf die Wickelspule 20 aufgewickelt, während das gegenüberliegende Seilende von der benachbarten Wickelspule 19 abgewickelt wird und umgekehrt. Entsprechende Spulendurchmesser der Wickelspule 19 und 20 sind identisch zueinander gestaltet, so dass sich bei einer Verlagerung des Seilzugs 21 eine gleichmäßige Seilspannung einstellt. Da das Führungsprofil 7 mit dem entsprechenden Seil des Seilzugs 21 verbunden ist, führt eine Drehung der Wickelspulen 19 und 20 zwangsläufig zu einer Verlagerung des Führungsprofils 7 in der Zeichnungsebene gemäß Fig. 1 nach links oder nach rechts.

Um den Nebenantriebsstrang 16 mit dem Antriebsmotor 8 zu koppeln, ist koaxial zu der Synchronwelle S und drehfest mit der Synchronwelle S und dem Stirnzahnrad 15 ein Abtriebsglied 17, 18 vorgesehen, das koaxial und drehfest mit einem Stirnende der Synchronwelle S und demzufolge mit einem Stirnende des Stirnzahnrads 15 sowie in Verlängerung der Wickelspule 13 verbunden ist. Das Abtriebsglied 17, 18 wird gebildet durch ein Kegelrad 17, das mit einem rechtwinklig zu der Drehachse des Kegelrads 17 ausgerichteten, weiteren Kegelrad 18 kämmt. Das weitere Kegelrad 18 ist koaxial und drehfest zu der Wickelspule 19 angeordnet, so dass über die beiden Kegelräder 17 und 18 eine rechtwinklige Umlenkung des Antriebsdrehmoments des Antriebsmotors 8 erfolgt.

Durch eine Bestromung und Steuerung des elektrischen Antriebsmotors 8 wird bei der Beschattungsvorrichtung 1 gemäß Fig. 1 die Übertragungswelle 9 gedreht, wodurch das Antriebszahnrad 10 sich dreht und dieses mit dem Stirnzahnrad 11 kämmt, das wiederum mit dem Stirnzahnrad 15 kämmt. Durch die koaxiale und drehfeste Verbindung mit dem Kegelzahnradgetriebe 17 und 18 werden die beiden Wickelspulen 19 und 20 gegensinnig und synchron zueinander angetrieben, wodurch eine gleichzeitige Verlagerung aller Seilzüge 14a, 14b und 21 für das Hauptbeschattungsgebilde 2 und das Nebenbeschattungsgebilde 5 erfolgt. Um auch das Nebenbeschattungsgebilde 5 einer gewissen permanenten Vorspannung und demzufolge einer faltenfreien Aufspannung zu unterwerfen, ist zwischen der Umlenkwalze 22 und der Wickelwelle 6 eine Federvorspanneinrichtung analog der Fig. 2 vorgesehen, wie sie zwischen dem Stirnzahnrad 11 und der Wickelwelle 3 für das Hauptbeschattungsgebilde 2 realisiert ist.

Die Seilzüge 14a und 14b dienen als Antriebsübertragungsmittel im Sinne der Erfindung. Das Kegelzahnrad 17 bildet gemeinsam mit dem Kegelzahnrad 18 das Abtriebsglied im Sinne der Erfindung. Die konischen Wickelspulen 12 und 13 stellen Antriebselemente für die Seilzüge 14a und 14b dar. Das Antriebszahnrad 10 und die beiden Stirnzahnräder 11 und 15 bilden ein Zahnradgetriebe im Sinne der Erfindung. Die beiden Kegelzahnräder 17 und 18 bilden ein Kegelzahnradgetriebe im Sinne der Erfindung.

Als Antriebsübertragungsmittel für das Hauptbeschattungsgebilde bzw. als Antriebsübertragungsmittel für das Nebenbeschattungsgebilde können statt entsprechender Seilzüge auch andere Zug- und/oder Druckmittel, insbesondere Riementriebe oder auch Gewindesteigungskabel, vorgesehen sein.

Als Anlenkung im Sinne der Erfindung dient die koaxiale und drehfeste Kopplung des Kegelzahnrads 18 mit der Wickelspule 19.

## Patentansprüche

1. Beschattungsvorrichtung (1) für eine zweigeteilte Seitenfensteranordnung eines Kraftfahrzeugs mit einem Hauptbeschattungsgebilde (2) für ein Hauptfenster und mit einem Nebenbeschattungsgebilde (5) für ein Nebenfenster, wobei das Hauptbeschattungsgebilde (2) zumindest im Wesentlichen in Hochrichtung zwischen einer Ruhestellung und einer Beschattungsstellung verlagerbar ist und auf einer Wickelwelle (3) auf- und abwickelbar gehalten ist, und wobei das Nebenbeschattungsgebilde (5) zumindest im Wesentlichen quer zu dem Hauptbeschattungsgebilde (2) zwischen einer Ruhestellung und einer Beschattungsstellung verlagerbar ist, sowie mit einem Antriebssystem, das eine Antriebseinheit (8) und einen Hauptantriebsstrang mit zwei Antriebsübertragungsmitteln (14a, 14b) aufweist, die mit dem Hauptbeschattungsgebilde (2) zusammenwirken, und das einen Nebenantriebsstrang (16) mit wenigstens einem Antriebsübertragungsmittel zur Verlagerung des Nebenbeschattungsgebildes (5) aufweist, der mit der Antriebseinheit (8) in Wirkverbindung ist, **dadurch gekennzeichnet, dass** Antriebselemente für die zwei Antriebsübertragungsmittel des Hauptbeschattungsgebildes (2) über eine Synchronwelle (S) synchron drehfest miteinander gekoppelt sind, und dass die Synchronwelle (S) zu der Wickelwelle für das Hauptbeschattungsgebilde (2) zumindest weitgehend parallel beabstandet gelagert ist.

2. Beschattungsvorrichtung nach Anspruch 1, **dadurch gekennzeichnet, dass** die Synchronwelle (S) über ein Getriebe mit der Antriebseinheit (8) gekoppelt ist, und dass der Nebenantriebsstrang (16) koaxial von der Synchronwelle (S) abgeleitet ist.

3. Beschattungsvorrichtung nach Anspruch 2, **dadurch gekennzeichnet, dass** der Nebenantriebsstrang (16) ein Abtriebsglied aufweist, das auf einer Seite koaxial und drehfest mit der Synchronwelle (S) verbunden ist.

4. Beschattungsvorrichtung nach Anspruch 3, **dadurch gekennzeichnet, dass** das Abtriebsglied auf einer anderen Seite mit dem wenigstens einen Übertragungsmittel des Nebenantriebsstrangs (16) über eine Anlenkung verbunden ist, deren Drehachse winklig, insbesondere rechtwinklig, zu einer Drehachse der Synchronwelle (S) ausgerichtet ist.

5. Beschattungsvorrichtung nach Anspruch 3 oder 4, **dadurch gekennzeichnet, dass** das Abtriebsglied als Kegelzahnradgetriebe oder als flexible Übertragungswelle ausgebildet ist.

6. Beschattungsvorrichtung nach einem der vorhergehenden Ansprüche, **dadurch gekennzeichnet, dass** die Antriebseinheit (8) mittels eines Zahnradgetriebes (10, 11, 15) mit der Wickelwelle (3), der Synchronwelle (S) und dem Abtriebsglied (17, 18) gekoppelt ist.

7. Beschattungsvorrichtung nach einem der vorhergehenden Ansprüche, **dadurch gekennzeichnet, dass** einem Stirnende der Wickelwelle (3) und einem Stirnende der Synchronwelle (S) zwei miteinander kämmende Stirnzahnräder (11, 15) zugeordnet sind.

8. Beschattungsvorrichtung nach einem der vorhergehenden Ansprüche, **dadurch gekennzeichnet, dass** als Antriebsübertragungsmittel für das Nebenbeschattungsgebilde (5) ein Seilzug (21) mit zwei synchron gegenläufig zueinander angetriebenen Wickelspulen (19, 20) vorgesehen ist.

9. Beschattungsvorrichtung nach einem der vorhergehenden Ansprüche, **dadurch gekennzeichnet, dass** die Wickelwelle (3) konisch gestaltet ist, und dass als Antriebsübertragungsmittel für das Hauptbeschattungsgebilde (2) zwei Seilzüge (14a, 14b) mit zu der Konizität der Wickelwelle (3) derart komplementär konischen Wickelspulen (12, 13) vorgesehen sind, dass abhängig von den sich ändernden Wickellagen des Hauptbeschattungsgebildes (2) auf der Wickelwelle (3) eine gleichmäßige Zugbelastung der Seilzüge (14a, 14b) aufrechterhalten bleibt.

10. Beschattungsvorrichtung nach einem der vorhergehenden Ansprüche, **dadurch gekennzeichnet, dass** zwischen der Wickelwelle (3) des Hauptbeschattungsgebildes (2) und dem Zahnradgetriebe (10, 11, 15) der Antriebseinheit eine Federvorspanneinrichtung (23, 24) vorgesehen ist, die die Wickelwelle (3) in Aufwickelrichtung vorspannt.

11. Beschattungsvorrichtung nach Anspruch 10, **dadurch gekennzeichnet, dass** zwischen einer Wickelwelle (6) des Nebenbeschattungsgebildes (5) und dem Nebenantriebsstrang (16) eine weitere Federvorspanneinrichtung vorgesehen ist.

## Claims

1. Shading device (1) for a two-part side-window arrangement of a motor vehicle, having a main shading structure (2) for a main window and having a secondary shading structure (5) for a secondary window, wherein the main shading structure (2) can be displaced, at least essentially in the vertical direction, between a rest position and a shading position and is retained on a winding shaft (3) such that it can be wound up and unwound, and wherein the secondary shading structure (5) can be displaced, at least essentially transversely to the main shading structure (2), between a rest position and a shading position, and having a drive system, which has a drive unit (8) and a main drive train with two drive-transmission means (14a, 14b), interacting with the main shading structure (2), and which has a secondary drive train (16) with at least one drive-transmission means for displacing the secondary shading structure (5), which is in operative connection with the drive unit (8), **characterized in that** drive elements for the two drive-transmission means of the main shading structure (2) are coupled to one another synchronously in a rotationally fixed manner via a synchronization shaft (S), and **in that** the synchronization shaft (S) is mounted at a distance from the winding shaft for the main shading structure (2) and at least largely parallel thereto.

2. Shading device according to claim 1, **characterized in that** the synchronization shaft (S) is coupled to the drive unit (8) via a gear mechanism, and **in that** the secondary drive train (16) is led off coaxially from the synchronization shaft (S).

3. Shading device according to claim 2, **characterized in that** the secondary drive train (16) has an output member which, on one side, is connected to the synchronization shaft (S) coaxial and in a rotationally fixed manner.

4. Shading device according to claim 3, **characterized in that**, on another side, the output member is connected to the at least one transmission means of the secondary drive train (16) via an articulation, of which the axis of rotation is oriented at an angle, in particular at right angles, to an axis of rotation of the synchronization shaft (S).

5. Shading device according to claim 3 or 4, **characterized in that** the output member is designed in the form of a bevel-gear mechanism or in the form of a flexible transmission shaft.

6. Shading device according to any of the preceding claims, **characterized in that** the drive unit (8) is coupled to the winding shaft (3), the synchronization shaft (S) and the output member (17, 18) by means of a toothed-gear mechanism (10, 11, 15).

7. Shading device according to any of the preceding claims, **characterized in that** one end of the winding shaft (3) and one end of the synchronization shaft (S) are assigned two intermeshing spur gears (11, 15).

8. Shading device according to any of the preceding claims, **characterized in that** the drive-transmission means provided for the secondary shading structure (5) is in the form of a cable pull (21) with two winding spools (19, 20) driven synchronously in opposite directions to one another.

9. Shading device according to any of the preceding claims, **characterized in that** the winding shaft (3) is of conical configuration, and **in that** the drive-transmission means provided for the main shading structure (2) are in the form of two cable pulls (14a, 14b) with conical winding spools (12, 13) which complement the conicity of the winding shaft (3) such that, in dependence on the changing winding layers of the main shading structure (2) on the winding shaft (3), uniform tensile loading of the cable pulls (14a, 14b) is maintained.

10. Shading device according to any of the preceding claims, **characterized by** the provision, between the winding shaft (3) of the main shading structure (2) and the toothed-gear mechanism (10, 11, 15) of the drive unit, of a spring-pretensioning mechanism (23, 24), which pretensions the winding shaft (3) in the winding-up direction.

11. Shading device according to claim 10, **characterized in that** a further spring-pretensioning mechanism is provided between a winding shaft (6) of the secondary shading structure (5) and the secondary drive train (16).

## Revendications

1. Dispositif d'ombrage (1) destiné à un système en deux parties pour une vitre latérale d'un véhicule automobile avec un élément d'ombrage principal (2) pour une fenêtre principale et avec un élément d'ombrage secondaire (5) pour une fenêtre secondaire, dans lequel l'élément d'ombrage principal (2) est déplaçable au moins essentiellement en direction verticale entre une position de repos et une position d'ombrage et est maintenu de façon enroulable et déroulable sur un arbre d'enroulement (3), et dans lequel l'élément d'ombrage secondaire (5) est déplaçable au moins essentiellement transversalement à l'élément d'ombrage principal (2) entre une position de repos et une position d'ombrage, ainsi qu'avec un système d'entraînement, qui comporte une unité d'entraînement (8) et une chaîne cinématique principale avec deux moyens de transmission d'entraînement (14a, 14b), qui coopèrent avec l'élément d'ombrage principal (2), et qui présente une chaîne cinématique secondaire (16) avec au moins un moyen de transmission d'entraînement pour le déplacement de l'élément d'ombrage secondaire (5), qui est en liaison active avec l'unité d'entraînement (8), **caractérisé en ce que** des éléments d'entraînement pour les deux moyens de transmission d'entraînement de l'élément d'ombrage principal (2) sont couplés l'un à l'autre de façon calée en rotation et synchrone par un arbre de synchronisation (S), et **en ce que** l'arbre de synchronisation (S) est disposé à distance au moins largement parallèlement à l'arbre d'enroulement pour l'élément d'ombrage principal (2).

2. Dispositif d'ombrage selon la revendication 1, **caractérisé en ce que** l'arbre de synchronisation (S) est couplé par un engrenage à l'unité d'entraînement (8), et **en ce que** la chaîne cinématique secondaire (16) est dérivée de façon coaxiale de l'arbre de synchronisation (S) .

3. Dispositif d'ombrage selon la revendication 2, **caractérisé en ce que** la chaîne cinématique secondaire (16) présente un organe de sortie, qui est relié sur un côté de façon coaxiale et de façon calée en rotation à l'arbre de synchronisation (S).

4. Dispositif d'ombrage selon la revendication 3, **caractérisé en ce que** l'organe de sortie est relié sur un autre côté audit au moins un moyen de transmission de la chaîne cinématique secondaire (16) par une articulation, dont l'axe de rotation est orienté de façon angulaire, en particulier perpendiculairement, à un axe de rotation de l'arbre de synchronisation (S).

5. Dispositif d'ombrage selon une revendication 3 ou 4, **caractérisé en ce que** l'organe de sortie est formé par un engrenage à roues dentées coniques ou par un arbre de transmission flexible.

6. Dispositif d'ombrage selon l'une quelconque des revendications précédentes, **caractérisé en ce que** l'unité d'entraînement (8) est couplée au moyen d'une transmission par engrenages (10, 11, 15) à l'arbre d'enroulement (3), à l'arbre de synchronisation (S) et à l'organe de sortie (17, 18).

7. Dispositif d'ombrage selon l'une quelconque des revendications précédentes, **caractérisé en ce que** deux roues dentées droites (11, 15) engrenant l'une avec l'autre sont associées à une extrémité frontale de l'arbre d'enroulement (3) et à une extrémité frontale de l'arbre de synchronisation (S).

8. Dispositif d'ombrage selon l'une quelconque des revendications précédentes, **caractérisé en ce qu'**il est prévu comme moyen de transmission d'entraînement pour l'élément d'ombrage secondaire (5) une commande par câble (21) avec deux bobines d'enroulement (19, 20) entraînées de façon synchrone en sens contraire l'une de l'autre.

9. Dispositif d'ombrage selon l'une quelconque des revendications précédentes, **caractérisé en ce que** l'arbre d'enroulement (3) est de forme conique, et **en ce qu'**il est prévu comme moyen de transmission d'entraînement pour l'élément d'ombrage principal (2) deux commandes à câble (14a, 14b) avec des bobines d'enroulement coniques (12, 13) complémentaires à la conicité de l'arbre d'enroulement (3), de telle manière qu'une charge de traction uniforme des commandes à câble (14a, 14b) soit conservée en fonction de la variation des couches enroulées de l'élément d'ombrage principal (2) sur l'arbre d'enroulement (3).

10. Dispositif d'ombrage selon l'une quelconque des revendications précédentes, **caractérisé en ce qu'**il est prévu entre l'arbre d'enroulement (3) de l'élément d'ombrage principal (2) et la transmission par engrenages (10, 11, 15) de l'unité d'entraînement un système de précontrainte à ressort (23, 24), qui précontraint l'arbre d'enroulement (3) dans le sens de l'enroulement.

11. Dispositif d'ombrage selon la revendication 10, **caractérisé en ce qu'**il est prévu un autre système de précontrainte à ressort entre un arbre d'enroulement (6) de l'élément d'ombrage secondaire (5) et la chaîne cinématique secondaire (16).
